# EUROPEAN PATENT APPLICATION

(11) **EP 1 906 598 A1**
(43) Date of publication of application: **02.04.2008**
(21) Application number: 06026420.7
(22) Date of filing: 20.12.2006
(51) Int. Cl.: H04L 12/437

(54) **Communication packet processing apparatus and method for ring topology ethernet network capable of preventing permanent packet looping**

(30) Priority: 29.09.2006 KR 20060096378
(71) Applicant: LS Industrial Systems Co., Ltd, Jung-Gu Seoul (KR)
(72) Inventor: Yoon, Geon, Gyeonggi-Do (KR)
(74) Representative: Altenburg, Udo

(57) **Abstract**

Disclosed are a communication packet processing apparatus and method for a ring topology Ethernet network capable of preventing permanent packet looping which can maintain the performance of the network by preventing generation of the permanent looping in the ring topology Ethernet network. The communication packet processing apparatus and method compare a destination MAC address of a communication packet with a MAC address of a communication node, decide whether to transfer the communication packet to a CPU according to the comparison result, compare a source MAC address of the communication packet with the MAC address of the communication node, and decide whether to terminate the communication packet or transfer the communication packet to another communication node according to the comparison result.

## Description

### BACKGROUND OF THE INVENTION

### 1. Field of the Invention

The present invention relates to a communication packet processing apparatus and method capable of preventing permanent looping of a communication packet in a total dual communication type ring topology Ethernet network, and more particularly, to a communication packet processing apparatus and method for a ring topology Ethernet network capable of improving performance of the network, by preventing a communication packet which does not have a specific destination address or a communication packet which has a destination address for a communication node which does not exist on the network from reducing the performance of the network by permanent looping, and by reducing an unnecessary load of a communication node in the ring topology Ethernet network using two Ethernet ports and a communication module for providing a communication packet transfer function between the Ethernet ports.

### 2. Description of the Background Art

Recently, in a distributed control system mainly used in an industrial site such as a factory and a power plant, a main controller and sub controllers are connected through a high reliability network.

There are thus increasing demand and significance for a large scale high reliability communication network. The Ethernet communication technology has been widely used in a network for business.

The Ethernet communication technology has been constantly applied to the industrial site. However, the Ethernet communication technology is still dependent upon a hub or a switch.

In order to reduce the dependency on the hub or switch, there has been suggested a method for building a ring topology Ethernet network by using two Ethernet ports.

When a communication packet is transmitted on the ring topology Ethernet network in the industrial site, the packet is consumed (terminated) in a communication node designated as a destination address. The communication packet consumed in the communication node does not exist on the ring topology Ethernet network any more.

However, a communication packet which does not have a specific destination address such as a broadcast packet, or a communication packet which has a destination address which does not exist on the ring topology Ethernet network performs permanent looping on the ring topology Ethernet network.

The permanent looping of the communication packet deteriorates the performance of the ring topology Ethernet network, and causes a communication paralysis in the worst case. In the industrial site such as the factory and the power plant, the communication speed reduction or the communication paralysis results in the loss of material and man power.

### SUMMARY OF THE INVENTION

Therefore, an object of the present invention is to provide a communication packet processing apparatus and method for a ring topology Ethernet network capable of preventing permanent packet looping which can maintain the performance of the network by preventing generation of the permanent looping in the ring topology Ethemet network.

To achieve these and other advantages and in accordance with the purpose of the present invention, as embodied and broadly described herein, there is provided a communication packet processing apparatus for a ring topology Ethernet network capable of preventing permanent packet looping, including: a fast Ethernet transmitting/receiving device installed on one communication node of the Ethernet network, for transmitting or receiving a communication packet to/from communication media of the Ethernet network; a Central Processing Unit (abbreviated as CPU hereinafter) installed on the communication node, for generating or processing and consuming the communication packet; and a Media Access Controller (abbreviated as MAC hereinafter) connected between the CPU and the fast Ethernet transmitting/receiving device on the communication node, for comparing a destination MAC address of the communication packet received and provided by the fast Ethernet transmitting/receiving device with its MAC address, deciding whether to transfer the communication packet to the CPU according to the comparison result, comparing a source MAC address of the communication packet received and provided by the fast Ethernet transmitting/receiving device with its MAC address, and deciding whether to terminate the communication packet or transfer the communication packet to another communication node according to the comparison result.

There is also provided a communication packet processing method for a ring topology Ethernet network capable of preventing permanent packet looping, which uses a communication node including an Ethernet transmitting/receiving device for transmitting or receiving a communication packet to/from communication media of the Ethernet network, a CPU for generating or processing and consuming the communication packet, and a MAC connected between the CPU and the Ethernet transmitting/receiving device, for controlling access of the communication media, the communication packet processing method, including: a first comparison step for comparing a destination MAC address of the communication packet with a MAC address of the communication node receiving the communication packet; when the two addresses are identical in the first comparison step, a step for transmitting the communication packet to the CPU to be processed and consumed; when the two addresses are different in the first comparison step, a second comparison step for comparing a source MAC address of the communication packet with the MAC address of the communication node receiving the communication packet; when the two addresses are identical in the second comparison step, a step for terminating the communication packet; and when the two addresses are different in the second comparison step, a step for transferring the communication packet to another communication node.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a network configuration view illustrating one configuration example of a ring topology Ethernet network to which communication packet processing apparatuses built in control systems and communication media cables are connected;
Figure 2 is a block view illustrating the communication packet processing apparatus for the ring topology Ethernet network capable of preventing permanent packet looping in accordance with one preferred embodiment of the present invention;
Figure 3 is a communication packet structure view illustrating a frame structure of a communication packet in the communication packet processing apparatus and method in accordance with the present invention;
Figure 4 is a flowchart showing the communication packet processing method for the ring topology Ethernet network capable of preventing permanent packet looping in accordance with one preferred embodiment of the present invention;
Figure 5 is a flowchart showing a communication packet processing method of a communication node set as a manager node in a communication packet processing method for a ring topology Ethernet network capable of preventing permanent packet looping in accordance with another preferred embodiment of the present invention; and
Figure 6 is a flowchart showing a communication packet processing method of an ordinary communication node in the communication packet processing method for the ring topology Ethernet network capable of preventing permanent packet looping in accordance with another preferred embodiment of the present invention.

### DETAILED DESCRIPTION OF THE INVENTION

Reference will now be made in detail to the preferred embodiments of the present invention, examples of which are illustrated in the accompanying drawings.

A communication packet processing apparatus and method in accordance with the preferred embodiments of the present invention will now be described in detail with reference to the accompanying drawings.

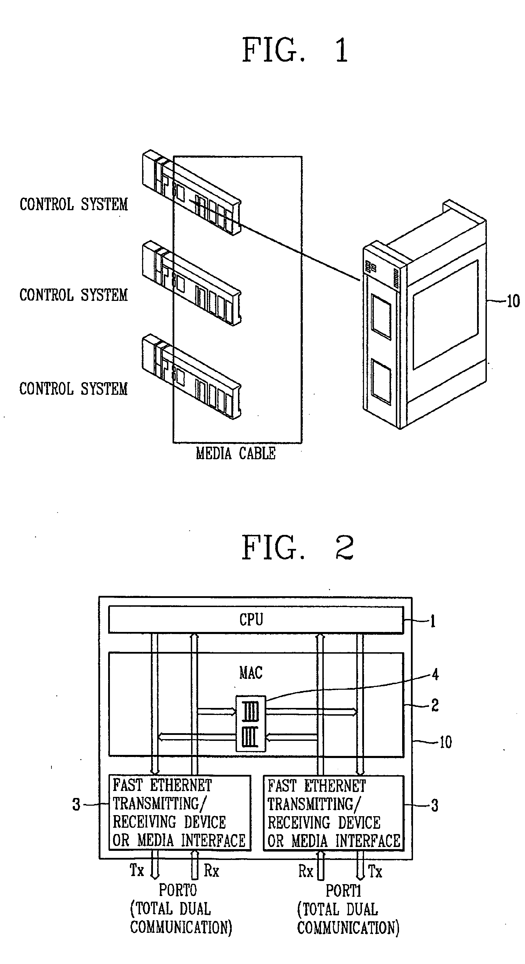

Figure 1 is a network configuration view illustrating one configuration example of a ring topology Ethernet network to which the communication packet processing apparatuses built in control systems and communication media cables are connected.

Referring to Figure 1, the communication packet processing apparatus 10 for the ring topology Ethernet network capable of preventing permanent packet looping in accordance with the present invention (hereinafter, referred to as 'communication packet processing apparatus') is formed in a module shape and built in the plurality of control systems, for example, programmable logic controllers (PLC).

That is, each of the communication packet processing apparatuses 10 forms one communication node and is built in each of the control systems as a module.

Two upper and lower Ethernet communication ports are formed on the front surfaces of each communication packet processing apparatus 10. Two line communication media cables for transmission and reception are connected to each Ethernet communication port.

The plurality of control systems forming a distributed control system include the modules of the communication packet processing apparatuses 10. The Ethernet communication ports of the communication packet processing apparatuses 10 are connected to each other through the two line communication media cables, thereby forming the total dual type ring topology Ethernet network.

The detailed structure of the communication packet processing apparatus for the ring topology Ethernet network capable of preventing the permanent packet looping in accordance with the present invention will now be described with reference to Figure 2.

The communication packet processing apparatus for the ring topology Ethernet network capable of preventing the permanent packet looping includes a fast Ethernet transmitting/receiving device 3 installed on one communication node of the Ethernet network, for receiving or transmitting a communication packet to communication media of the Ethernet network.

In addition, the communication packet processing apparatus includes a Central Processing Unit (CPU) 1 installed on the communication node, for generating or processing and consuming the communication packet.

A Media Access Controller (MAC) 2 of the communication packet processing apparatus is connected between the CPU 1 and the fast Ethernet transmitting/receiving device 3 on the communication node.

The MAC 2 compares a destination MAC address of the communication packet received and provided by the fast Ethernet transmitting/receiving device 3 with its MAC address, and decides whether to transfer the communication packet to the CPU 1 according to the comparison result.

The MAC 2 also compares a source MAC address of the communication packet received and provided by the fast Ethernet transmitting/receiving device 3 with its MAC address, and decides whether to terminate the communication packet or transfer the communication packet to another communication node according to the comparison result.

The fast Ethernet transmitting/receiving device 3 can be called a media interface. In this embodiment, two fast Ethernet transmitting/receiving devices 3 are installed. The fast Ethernet transmitting/receiving devices 3 include ports port0 and port1 connectable to a pair of communication media cables for transmission and reception, for example, a pair of optical cables, respectively.

The CPU 1 processes and consumes the communication packet from another communication node, or generates the communication packet for another communication node.

In transmission, the MAC 2 transfers the communication packet from the CPU 1 to the fast Ethernet transmitting/receiving device 3. In reception, the MAC 2 is operated as follows on the basis of a prestored program and a preset and prestored MAC address.

The MAC 2 compares the destination MAC address contained in the received communication packet, namely, the address of the communication node intended to receive the communication packet with its preset and prestored MAC address.

As the comparison result, if the two addresses are identical, it means that the transmitting communication node has designated the current communication node as the receiving communication node and transmitted the communication packet to the current communication node. Therefore, the MAC 2 transfers the received communication packet to the CPU 1.

As the comparison result, if the two addresses are different, the MAC 2 compares the source MAC address of the received communication packet, namely, the address of the communication node which has generated and transmitted the communication packet (hereinafter, referred as 'source address') with its preset and prestored MAC address (MAC address of the communication node receiving the communication packet).

If the source address is identical to the preset MAC address, it means that the communication packet transmitted by the current communication node has returned by network looping. Thus, the MAC 2 terminates the communication packet.

If the source address is different from the preset MAC address, it means that another communication node has generated and transmitted the received communication packet by designating yet another communication node as the destination communication node. Accordingly, the MAC 2 transmits the communication packet to the corresponding communication node through a different port from the receiving port.

In accordance with the present invention, the communication packet processing apparatus further includes a memory 4 for temporarily storing the communication packets. When the MAC 2 and the CPU 1 intend to transmit the communication packet to the same fast Ethernet transmitting/receiving device 3 at the same time, the memory 4 serves to prevent collision. The memory 4 is called a queue.

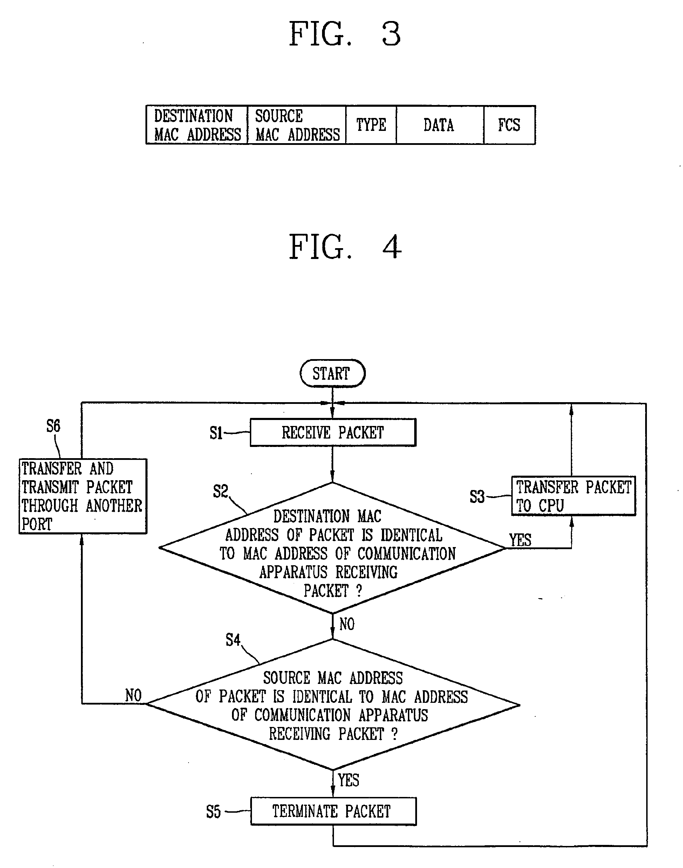

Figure 3 is a communication packet structure view illustrating a frame structure of the communication packet in the communication packet processing apparatus and method in accordance with the present invention.

As shown in Figure 3, DESTINATION MAC ADDRESS means an address of a destination communication node, SOURCE MAC ADDRESS means an address of a communication node generating and transmitting a communication packet, TYPE means a type of the packet, and FCS (frame check sequence) contains information for deciding damage of the packet.

In each communication node, the MAC 2 can decide whether the communication packet has been damaged on the basis of the information of the FCS by using the prestored program. If the communication packet has been damaged, the MAC 2 can terminate the communication packet.

The operation of the communication packet processing apparatus and the communication packet processing method in accordance with the present invention will now be explained with reference to Figures 4 to 6.

The communication packet processing method is classified into two. The first method gives the authority of terminating the communication packet to the whole communication nodes.

The second method sets a specific communication node as a manager node, and gives the authority of terminating the communication packet performing the permanent looping to the manager node. The ordinary communication nodes transfer the communication packets to another communication nodes, when the destination addresses of the communication packets are different from their addresses.

The first communication packet processing method will now be described with reference to Figure 4.

When the MAC 2 receives the communication packet in step S1, the MAC 2 goes to step S2 and compares the destination MAC address of the frame of the communication packet with the MAC address of the receiving communication apparatus, namely, its communication node.

As the comparison result of step S2, if the two addresses are identical, it means that the transmitting communication node has transmitted the communication packet to the current communication node. Therefore, the MAC 2 goes to step S3 and transfers the communication packet to the CPU 1.

As the comparison result of step S2, if the two addresses are different, the MAC 2 goes to step S4 and compares the source MAC address of the received communication packet with the MAC address of the receiving communication apparatus, namely, its communication node.

As the comparison result of step S4, if the two addresses are identical, it means that the communication packet transmitted by the current communication node has returned by looping. Accordingly, the MAC 2 goes to step S5 and terminates the communication packet.

As the comparison result of step S4, if the two addresses are different, the MAC 2 goes to step S6 and transmits (transfers) the received communication packet to another communication node through a different port from the receiving port.

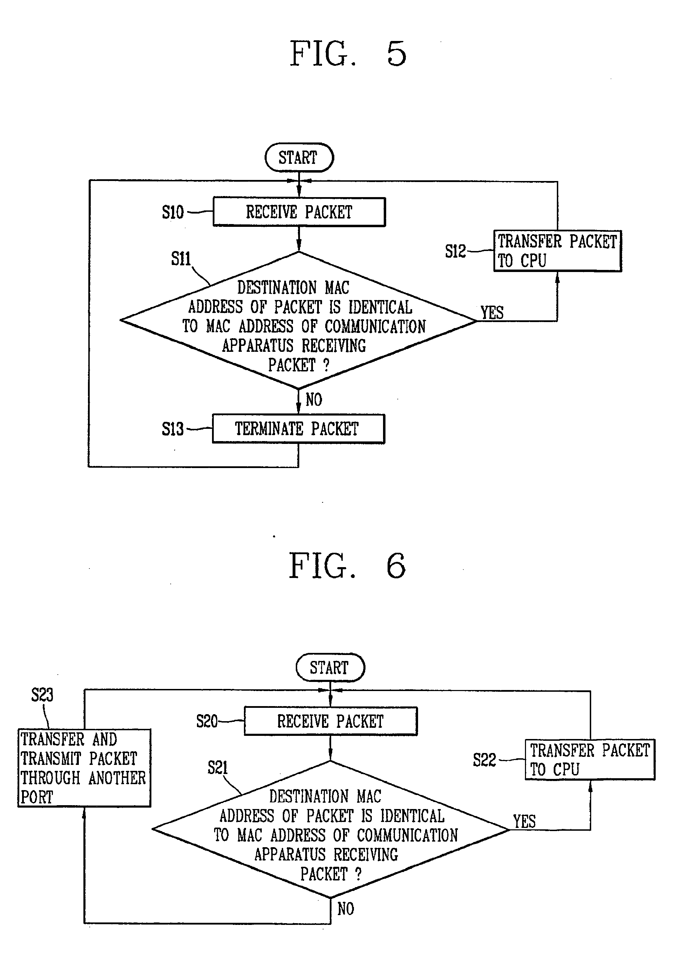

The second communication packet processing method will now be described with reference to Figures 5 and 6.

Figure 5 is a flowchart showing a communication packet processing method of a communication node set as a manager node in accordance with another preferred embodiment of the present invention.

Figure 6 is a flowchart showing a communication packet processing method of an ordinary communication node in accordance with another preferred embodiment of the present invention.

As illustrated in Figure 5, the MAC 2 of the communication node set as the manager node reads information notifying that the communication node has been set as the manager node from a memory means such as a ROM (not shown) with a communication processing program, and processes a received communication packet as follows.

When the MAC 2 of the communication node set as the manager node receives the communication packet in step S10, the MAC 2 goes to step S11 and compares the destination MAC address of the frame of the received communication packet with the MAC address of the receiving communication apparatus, namely, its communication node.

As the comparison result of step S11, if the two addresses are identical, it means that the transmitting communication node has transmitted the communication packet to the current communication node. Therefore, the MAC 2 goes to step S12 and transfers the communication packet to the CPU 1.

As the comparison result of step S11, if the two addresses are different, the MAC 2 goes to step S13 and terminates the communication packet.

As shown in Figure 6, the MAC 2 of the ordinary communication node reads information notifying that the communication node has not been set as the manager node from a memory means such as a ROM (not shown) with a communication processing program, and processes a received communication packet as follows.

When the MAC 2 of the ordinary communication node which has not been set as the manager node receives the communication packet in step S20, the MAC 2 goes to step S21 and compares the destination MAC address of the frame of the received communication packet with the MAC address of the receiving communication apparatus, namely, its communication node.

As the comparison result of step S21, if the two addresses are identical, it means that the transmitting communication node has transmitted the communication packet to the current communication node. Accordingly, the MAC 2 goes to step S22 and transfers the communication packet to the CPU 1.

As the comparison result of step S21, if the two addresses are different, the MAC 2 goes to step S23 and transmits, namely, transfers the communication packet to another communication node through a different port from the receiving port.

By transferring the received communication packet through the different port from the receiving port, the MAC 2 transmits the communication packet from the clockwise direction to the anticlockwise direction and vise versa in the ring topology communication network, thereby improving a transmission success rate of data.

As discussed earlier, in accordance with the present invention, the communication packet processing apparatus and method for the ring topology Ethernet network capable of preventing the permanent packet looping can prevent the communication packet generated by the receiving communication node, the communication packet which does not have a specific destination address, the communication packet which has a destination address which does not exist on the network, or the communication packet which has a damaged frame from seriously reducing the performance of the network by the permanent looping.

In addition, the communication packet processing apparatus and method for the ring topology Ethernet network can reduce an unnecessary processing load of the communication node receiving the communication packet performing the permanent looping, and improve the transmission success rate of data by transmitting the communication packet to both directions.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A communication packet processing apparatus for a ring topology Ethernet network capable of preventing permanent packet looping, comprising:
a fast Ethernet transmitting/receiving device installed on one communication node of the Ethernet network, for transmitting or receiving a communication packet to/from communication media of the Ethernet network;
a Central Processing Unit installed on the communication node, for generating or processing and consuming the communication packet; and
a Media Access Controller connected between the Central Processing Unit and the fast Ethernet transmitting/receiving device on the communication node, for comparing a destination Media Access Controller address of the communication packet received and provided by the fast Ethernet transmitting/receiving device with its Media Access Controller address, deciding whether to transfer the communication packet to the Central Processing Unit according to the comparison result, comparing a source Media Access Controller address of the communication packet received and provided by the fast Ethernet transmitting/receiving device with its Media Access Controller address, and deciding whether to terminate the communication packet or transfer the communication packet to another communication node according to the comparison result.

2. The communication packet processing apparatus as claimed in claim 1, further comprising a memory for temporarily storing the communication packets to prevent collision, when the Media Access Controller and the Central Processing Unit transmit the communication packets to the fast Ethernet transmitting/receiving device at the same time.

3. The communication packet processing apparatus as claimed in claim 1, wherein the Media Access Controller comprises a prestored program for terminating the communication packet on the basis of a field containing information on damage of the communication packet in the frame of the communication packet.

4. The communication packet processing apparatus as claimed in claim 1, wherein two fast Ethernet transmitting/receiving devices are installed with communication ports, for improving a communication success rate by changing a communication direction.

5. A communication packet processing method for a ring topology Ethernet network capable of preventing permanent packet looping, which uses a communication node comprising an Ethernet transmitting/receiving device for transmitting or receiving a communication packet to/from communication media of the Ethernet network, a Central Processing Unit for generating or processing and consuming the communication packet, and a Media Access Controller connected between the Central Processing Unit and the Ethernet transmitting/receiving device, for controlling access of the communication media, the communication packet processing method, comprising:
a first comparison step for comparing a destination Media Access Controller address of the communication packet with a Media Access Controller address of the communication node receiving the communication packet;
when the two addresses are identical in the first comparison step, a step for transmitting the communication packet to the Central Processing Unit to be processed and consumed;
when the two addresses are different in the first comparison step, a second comparison step for comparing a source Media Access Controller address of the communication packet with the Media Access Controller address of the communication node receiving the communication packet;
when the two addresses are identical in the second comparison step, a step for terminating the communication packet; and
when the two addresses are different in the second comparison step, a step for transferring the communication packet to another communication node.

6. A communication packet processing method for a ring topology Ethernet network capable of preventing permanent packet looping, which uses a communication node comprising an Ethernet transmitting/receiving device for transmitting or receiving a communication packet to/from communication media of the Ethernet network, a Central Processing Unit for generating or processing and consuming the communication packet, and a Media Access Controller connected between the Central Processing Unit and the Ethernet transmitting/receiving device, for controlling access of the communication media, the communication packet processing method, comprising:
a step for deciding whether the communication node has been set as a manager node according to preset information by using the Media Access Controller;
when the communication node has been set as the manager node, a first comparison step for comparing a destination Media Access Controller address of the received communication packet with a Media Access Controller address of the communication node receiving the communication packet;
when the two addresses are identical in the first comparison step, a step for transferring the communication packet to the Central Processing Unit to be processed and consumed;
when the two addresses are different in the first comparison step, a step for terminating the communication packet;
when the communication node has not been set as the manager node, a second comparison step for comparing the destination Media Access Controller address of the received communication packet with the Media Access Controller address of the communication node receiving the communication packet;
when the two addresses are identical in the second comparison step, a step for transferring the communication packet to the Central Processing Unit to be processed and consumed; and
when the two addresses are different in the second comparison step, a step for transferring the communication packet to another communication node.
